# EUROPEAN PATENT SPECIFICATION

(11) **EP 4 450 915 B1**
(45) Date of publication and mention of the grant of the patent: **29.07.2026**
(21) Application number: 23880171.6
(22) Date of filing: 17.10.2023
(51) Int. Cl.: G01B 3/24, G01B 5/00, G01B 5/06, H01M 10/058

(54) **CURVED BATTERY CELL THICKNESS MEASURING DEVICE INCLUDING LOW MEASURING PRESSURE CALIPERS AND CURVED BATTERY CELL THICKNESS MEASURING METHOD USING SAME**
VORRICHTUNG ZUR MESSUNG DER DICKE EINER GEKRÜMMTEN BATTERIEZELLE MIT BREMSSATTELN FÜR NIEDRIGEN MESSDRUCK UND VERFAHREN ZUR MESSUNG DER DICKE EINER GEKRÜMMTEN BATTERIEZELLE DAMIT
DISPOSITIF DE MESURE D'ÉPAISSEUR D'ÉLÉMENT DE BATTERIE INCURVÉ AVEC PIEDS À COULISSE À FAIBLE PRESSION DE MESURE ET PROCÉDÉ DE MESURE D'ÉPAISSEUR D'ÉLÉMENT DE BATTERIE INCURVÉ L'UTILISANT

(30) Priority: 17.10.2022 KR 20220133535
(43) Date of publication of application: 23.10.2024
(73) Proprietor: LG Energy Solution, Ltd., Seoul 07335 (KR)
(72) Inventor: KIM, Min Jung, Daejeon 34122 (KR); SONG, Dong Hun, Daejeon 34122 (KR)
(74) Representative: Goddar, Heinz J.
(86) International application number: PCT/KR2023/016031
(87) International publication number: WO 2024/085594

(56) References cited:
- WO-A1-2015/199625
- CN-U- 208 012 497
- CN-U- 209 326 526
- CN-U- 212 658 179
- CN-U- 216 954 314
- CN-U- 216 954 314
- JP-B2- 6 156 680
- KR-A- 20140 107 244
- US-A1- 2003 047 009
- US-A1- 2017 322 009

## Description

### [Technical Field]

The present invention relates to a curved battery cell thickness measurement apparatus including a low measurement pressure caliper and a curved battery cell thickness measurement method using the same. More particularly, the present invention relates to a curved battery cell thickness measurement apparatus capable of accurately and consistently measuring the thickness of a curved battery cell obtained as the result of deformation of a cuboidal battery cell and a curved battery cell thickness measurement method using the same.

### [Background Art]

Depending on the shape of a battery case, lithium secondary batteries are classified into a cylindrical secondary battery having an electrode assembly received in a cylindrical metal can, a prismatic secondary battery having an electrode assembly received in a prismatic metal can, and a pouch-shaped secondary battery having an electrode assembly received in a pouch-shaped case made of an aluminum laminate sheet. Since the pouch-shaped case is easily deformed, the pouch-shaped case may be used to manufacture an amorphous battery cell. The amorphous battery cell may be manufactured by deforming the electrode assembly according to the shape of a product and receiving the deformed electrode assembly in the pouch-shaped case.

There is a growing demand for a curved battery cell obtained by deforming a long side of a conventionally manufactured cuboidal pouch-shaped battery cell into the shape of an arc. It is advantageous to use a curved battery cell when the outer surface of a product is similar to the outer surface of a cylinder and the space in a device is limited, like a wrist-worn smart device or a VR device, or when there is a need to increase the battery capacity.

A curved battery cell is manufactured using a curved electrode assembly. Since the curved battery cell is deformed in order to maximally utilize space, it is necessary to accurately measure the dimensions, such as the inner diameter, outer diameter, and thickness, of the curved battery cell.

Since a battery cell has a lower hardness than metals, the dimensions of the battery cell are measured using a low measurement pressure caliper.

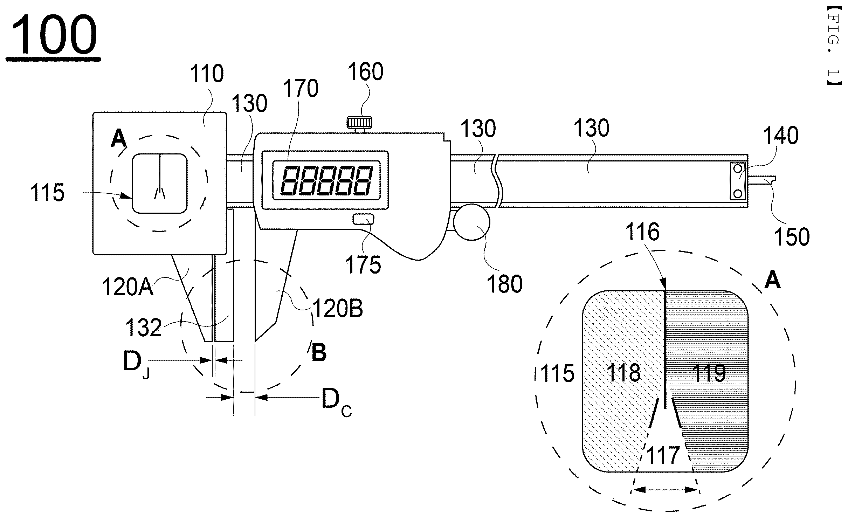

FIG. 1 is a schematic view of a low measurement pressure caliper. In particular, FIG. 1 shows a digital low measurement pressure caliper that digitally displays a scale rather than a graduated caliper. Human reading or digital display of readings in the form of a scale is well known in the art of calipers, and therefore a detailed description thereof will be omitted. While FIG. 1 shows a digital low measurement pressure caliper, the present invention may also be applied to an analog low measurement pressure caliper.

Referring to FIG. 1, the low measurement pressure caliper 100 includes a main scale 130, an outer jaw 120A fixed to one end of the main scale 130, a main scale jaw 132 disposed inside the outer jaw 120A and movable along the main scale 130 by a predetermined distance D_{J}, a static pressure device 110 configured to measure and display the pressure applied to the main scale jaw 132, an outer jaw 120B configured to move along the main scale 130, a digital display unit 170 configured to display a measurement value while moving with the outer jaw 120B, a stopper 140 configured to restrict the movement of the outer jaw 120B, a depth measurement tip 150 configured to measure depth, a fixing screw 160 configured to temporarily fix the outer jaw 120B, and a thumb roller 180 configured to help move the outer jaw 120B.

The low measurement pressure caliper 100 is used to measure a resilient object such as plastic or rubber that cannot be accurately measured with a typical standard caliper due to the measurement pressure applied during measurement. An object to be measured is placed between the outer jaws 120A and 120B, specifically between the main scale jaw 132 and the outer jaw 120B, and the outer jaw 120B is moved such that the main scale jaw 132 and the outer jaw 120B come into tight contact with opposite ends of the object to be measured. At this time, the thumb roller 180 may be used to easily move the outer jaw 120B.

When the applied pressure is high, the main scale jaw 132 may be moved by a predetermined distance D_{J}, typically less than 0.3 mm. The applied pressure is displayed on a static pressure indicator 115 of the static pressure device 110. That the pressure applied to the object to be measured is within a static pressure range may be confirmed through the static pressure indicator 115, and the thickness D_{C} of a curved battery cell may be measured through the value displayed on the digital display unit 170 at this time.

Referring to an enlarged view of a dotted line A in FIG. 1, a needle 116 is a reference of the static pressure indicator 115. When less than static pressure is applied, the needle 116 is located in a lower pressure region 118, and when more than static pressure is applied, the needle 116 is located in an upper pressure region 119. At a static pressure of 50 gf, the needle 116 is located in a static pressure region 117. When the needle 116 is located in the static pressure region 117, the value displayed on the digital display unit 170 must be read.

The initial position of the measurement, etc. may be reset using a reset button 175.

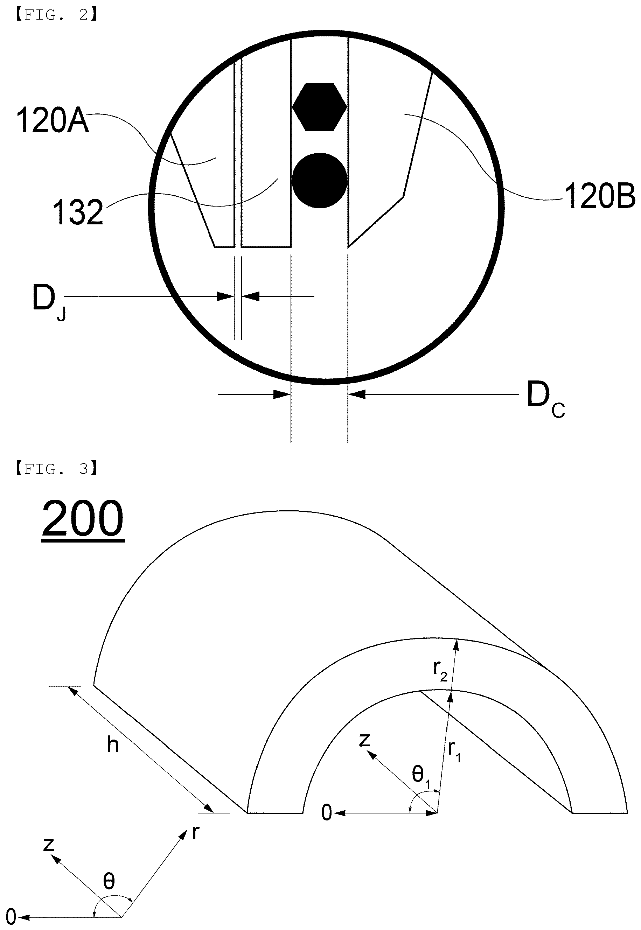

FIG. 2 is a schematic view showing a method of measuring an object using the low measurement pressure caliper. FIG. 2 is an enlarged view within dotted line B in FIG. 1.

When the outside of the object is measured, the object is disposed between the two outer jaws 120A and 120B for the typical caliper or is disposed between the main scale jaw 132 and the outer jaw 120B for the low measurement pressure caliper, the two jaws are brought into tight contact with the object, and the outside of the object is measured (D_{C}).

In general, the shortest distance between the two jaws in contact with the object is measured as the outside of the object. For a cuboidal battery cell, it is not hard to accurately and consistently measure the distance between two outer surfaces facing each other.

FIG. 3 is a view showing an example of a curved battery cell 200 to be measured in the present invention. The curved battery cell 200 is shaped like a cylinder cut in half in a height direction. Since the basic shape is a cylinder, a cylindrical coordinate system is more suitable than a Cartesian coordinate system in displaying positions. A position may be specified using the following three parameters, such as a rotation angle θ, a radial distance r, and a height z, relative to a specific position of 0 degrees based on the center of the lowermost end of the cylinder. The curved battery cell 200 has a z-axis length of h, an angle θ of 180 degrees, a radius r of an inner empty space of r₁, and an outer diameter of r₂. The thickness Dc of the curved battery cell 200 to be typically measured is the value obtained by subtracting r₁ from r₂. The position where r₂ and r₁ are measured is basically a vertical angle, i.e., 90 degrees, and if the value of Dc changes, the average of values measured at three angles θ is obtained. In the case of FIG. 3, measurement may be performed at angles of 0 degrees, 90 degrees, and 180 degrees.

An electrode assembly or a pouch-shaped battery cell has lower hardness than metals, and therefore the dimensions thereof are measured using a low measurement pressure caliper. In particular, an amorphous battery cell, such as a pouch-shaped curved battery cell, needs to be measured under the same pressure at positions to be measured (upper, middle, and lower positions), and therefore static pressure as well as low measurement pressure is necessary.

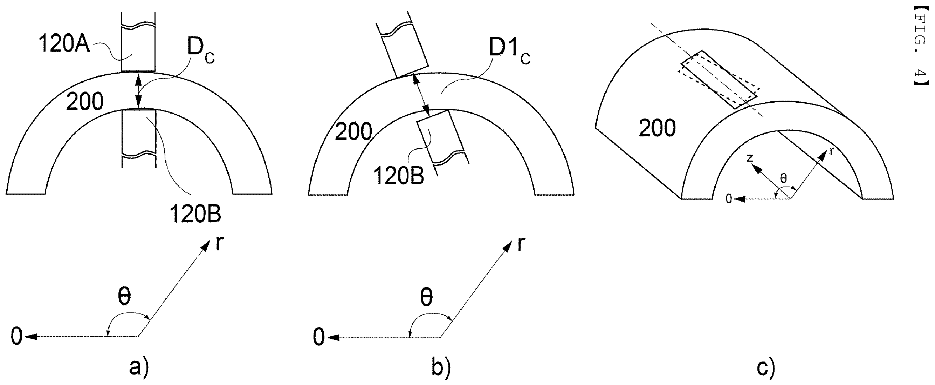

FIG. 4 is a view showing the measurement error that may occur when the thickness of a curved battery cell is measured using the caliper. Two outer jaws 120A and 120B are used, wherein each of the outer jaws, which is similar in shape to a cuboid, is simplified so as to be shown as a quadrangular shape. The curved battery cell 200 is exaggerated in shape and size such that the concept of measurement error can be easily grasped.

a) of FIG. 4 shows a section with z = 0 based on the cylindrical coordinates of FIG. 3. An example of correct measurement of the thickness D_{C} of the curved battery cell is shown. b) of FIG. 4 shows an error in which the outer jaws 120A and 120B are not directed toward the center of the arc, resulting in an error in which D1_{C}, which is larger than the true value of D_{C}, is measured.

c) of FIG. 4 shows an error in which the outer jaws must be in contact with the curved battery cell 200 along the vertical coordinate Z for measurement (a solid quadrangle) but measurement is performed in a distorted shape (a dotted quadrangle).

As such, various errors may occur when measuring the curved battery cell. In general, when the curved battery cell is held in one hand and measured with the caliper in the other hand, errors such as those shown in FIG. 4 may occur, and not only can accurate values not be obtained, but consistent values cannot be obtained even when the same person performs measurement. In particular, when an object having low hardness, such as the electrode assembly or the curved battery cell, is brought into contact with the outer jaws in a distorted state, the edge of the object comes into contact with the outer jaws, causing an error even in static pressure measurement. In this case, an error of up to 40 µm may occur.

Patent Document 1 relates to a tool length presetter including a base plate formed in a flat shape, the base plate being provided in an upper surface thereof with a guide groove downwardly recessed in a transverse direction for alignment of a cutting tool and being provided in one side of the upper surface thereof with an insertion groove downwardly recessed so as to be disposed perpendicular to the guide groove in a longitudinal direction, a measurement unit including a measurement support portion fixed to the upper surface of the base plate while being spaced apart from the guide groove in a width direction, a measurement traveler connected to the measurement support portion while being disposed above the guide groove so as to be spaced apart therefrom, the measurement traveler being configured to selectively move in the longitudinal direction so to be aligned with an end of the cutting tool in contact therewith, and a distance indicator configured to indicate the distance between an installation reference surface of the measurement traveler with which the end of the cutting tool is aligned in contact therewith and the insertion groove, and an alignment jig unit formed in a flat shape, wherein a lower edge of the alignment jig unit is selectively inserted into the insertion groove in a state of being disposed perpendicularly to the base plate, the alignment jig unit is provided in a central part thereof with a through-hole having an inner diameter greater than the outer diameter of the cutting tool such that the cutting tool is inserted through the through-hole and the length of the cutting tool is aligned and set, the through-hole being aligned with the guide groove, and the alignment jig unit is provided with a fixing pin portion configured to fix the cutting tool inserted through the through-hole.

Patent Document 2 relates to a length measurement instrument including a length measurement jig including a bottom plate, a fixing plate, and a guide rail, a slide, and a chuck, wherein the fixing plate is fixed to the bottom plate in an upright state, the guide rail is fixed to the bottom plate in a state of being perpendicular to the fixing plate, and one end of the guide rail faces the fixing plate.

Patent Document 3 relates to a caliper with a movable jaw for measuring the dimensions of an object, wherein an elastic mount for mounting a pressure actuator to the jaw of the caliper and a mounting method are disclosed.

Patent Document 4 relates to an apparatus for measuring the width and length of an exterior material of a battery cell, the apparatus including a base on which the battery cell is placed, a first fixing block having a first reference plane perpendicular to the base and fixed in position relative to the base, a second fixing block having a second reference plane perpendicular to both the base and the first reference plane and fixed in position relative to the base, a first movable block having a contact hand formed so as to protrude toward the first reference plane, the contact hand being in contact with the battery cell, the first movable block being configured to push the battery cell toward the first reference plane at a predetermined pressure P1 using the contact hand, and a second movable block configured to push the battery cell toward the second reference plane at a predetermined pressure P2.

All of Patent Documents 1 to 4 disclose precise measurement apparatuses but do not mention technology capable of providing accurate and consistent measurement values of an object such as a curved battery cell described in the present invention.

The document CN216954314U discloses a further battery cell thickness measurement apparatus according to the state of the art.
(Patent Document 1) Korean Registered Patent Publication No. 2320734 (2021.10.27)
(Patent Document 2) Chinese Utility Model Publication No. 215864992 (2022.02.18)
(Patent Document 3) Japanese Registered Patent Publication No. 6674194 (2020.03.10)
(Patent Document 4) Korean Registered Patent Publication No. 1764948 (2017.07.28)

### [Disclosure]

### [Technical Problem]

The present invention has been made in view of the above problems, and it is an object of the present invention to provide a curved battery cell thickness measurement apparatus capable of accurately and consistently measuring the thickness of a separator, an electrode, an electrode assembly, or a pouch-shaped curved battery cell including a curved surface, like a curved battery cell, and having low hardness and a method of accurately and consistently measuring the thickness of a curved battery cell using the same.

### [Technical Solution]

In order to accomplish the above object, the present invention provides a curved battery cell thickness measurement apparatus including a flat base; a caliper; a support configured to secure a main scale of the caliper and to space the caliper apart from the base by a predetermined distance; a jig including an arc-shaped first fixing portion and an arc-shaped second fixing portion, wherein the arc-shaped first fixing portion and the arc-shaped second fixing portion are located below outer jaws of the caliper; and a first moving portion to move the arc-shaped first fixing portion, wherein one of the outer jaws includes a first static pressure sensor.

At least one of the arc-shaped first fixing portion and the arc-shaped second fixing portion may include a second static pressure sensor. The second static pressure sensor may be located in the middle of the arc-shaped first fixing portion and/or the arc-shaped second fixing portion.

The caliper may be a low measurement pressure caliper.

A centerline of the arc-shaped first fixing portion and a centerline of the arc-shaped second fixing portion may be aligned, and the main scale of the caliper may be disposed along the centerline and is spaced apart from the base by a predetermined distance.

The arc-shaped first fixing portion may be configured to move along the centerline.

The curved battery cell thickness measurement apparatus may further include a second moving portion configured to move the arc-shaped second fixing portion.

In addition, the present invention provides a curved battery cell thickness measurement method using the curved battery cell thickness measurement apparatus according to the present invention, the curved battery cell thickness measurement method including:
1) spacing the arc-shaped first fixing portion apart from the arc-shaped second fixing;
2) placing a curved battery cell between the arc-shaped first fixing portion and the arc-shaped second fixing portion;
3) bringing the arc-shaped first fixing portion and the arc-shaped second fixing portion into tight contact with each other to vertically secure the curved battery cell; and
4) measuring the thickness of the curved battery cell using the caliper.

In step 4), a measurement value of the caliper may be obtained as a thickness value of the curved battery cell when a measurement value of the first static pressure sensor is within a static pressure range.

In step 4), a measurement value of the caliper may be obtained as a thickness value of the curved battery cell when both a measurement value of the first static pressure sensor and a measurement value of a second static pressure sensor provided on at least one of the arc-shaped first fixing portion and the second arc-shaped fixing portion are within a static pressure range.

The curved battery cell may be a cuboidal battery cell deformed into an arc-shape along a long side of the cuboidal battery cell, and the thickness of the curved battery cell may be measured in the middle of the arc-shape of the curved battery cell, at a left side of the arc-shape of the curved battery cell, and a right side of the arc-shape of the curved battery cell through steps 1) to 4).

The thickness of the curved battery cell may be measured in the middle of the arc-shape of the curved battery cell, at the left side of the arc-shape of the curved battery cell, and the right side of the arc-shape of the curved battery cell through steps 1) to 4) by rotating the curved battery cell along the jig.

In addition, the present invention may provide various combinations of the above solving means.

### [Advantageous Effects]

As is apparent from the above description, according to the present invention, it is possible to accurately and consistently measure the thickness of a curved battery cell. The present invention provides a curved battery cell thickness measurement apparatus capable of accurately and consistently measuring the thickness of a separator, an electrode, an electrode assembly, or a pouch-shaped curved battery cell including a curved surface, like a curved battery cell, and having low hardness and a method of accurately and consistently measuring the thickness of a curved battery cell using the same.

### [Description of Drawings]

FIG. 1 is a schematic view of a low measurement pressure caliper.
FIG. 2 is a schematic view showing a method of measuring an object using the low measurement pressure caliper.
FIG. 3 is a view showing an example of a curved battery cell to be measured in the present invention.
FIG. 4 is a view showing the measurement error that may occur when the thickness of a curved battery cell is measured using the caliper.
FIG. 5 is a perspective view of a curved battery cell thickness measurement apparatus according to the present invention.
FIG. 6 is a schematic view showing a way in which the thickness of a curved battery cell is measured in the state in which the curved battery cell is fixed to the curved battery cell thickness measurement apparatus according to the present invention.
FIGs. 7 to 9 are views showing a sequence of a method of measuring the thickness of a curved battery cell using the curved battery cell thickness measurement apparatus according to the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

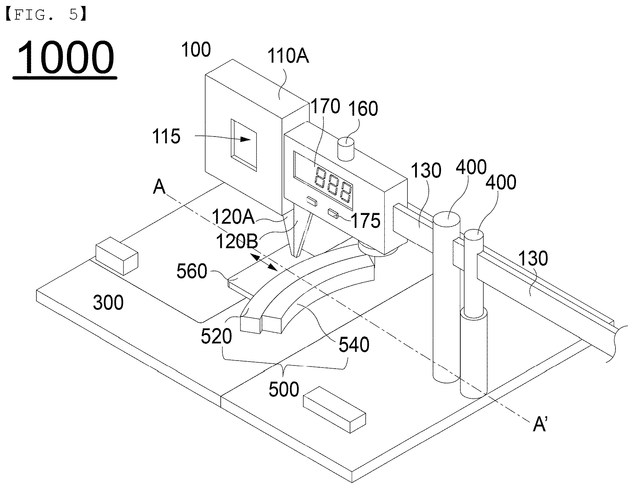

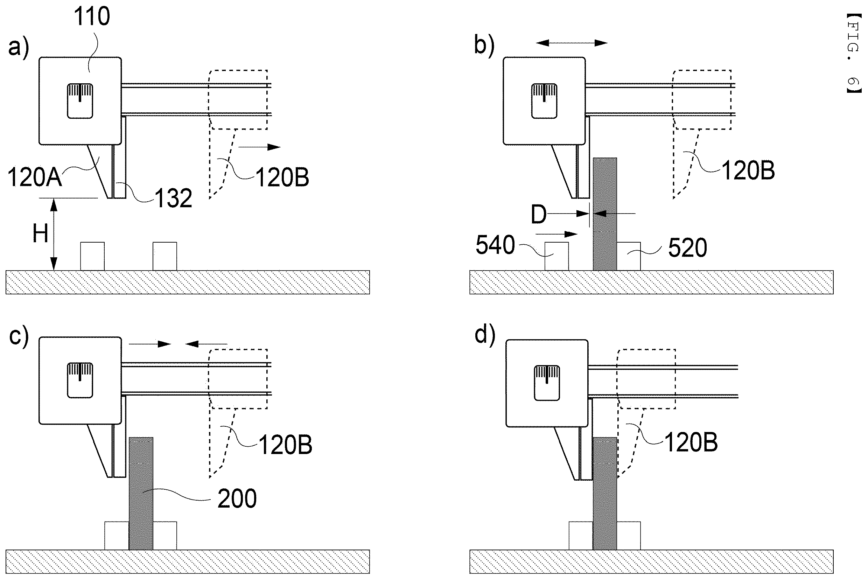

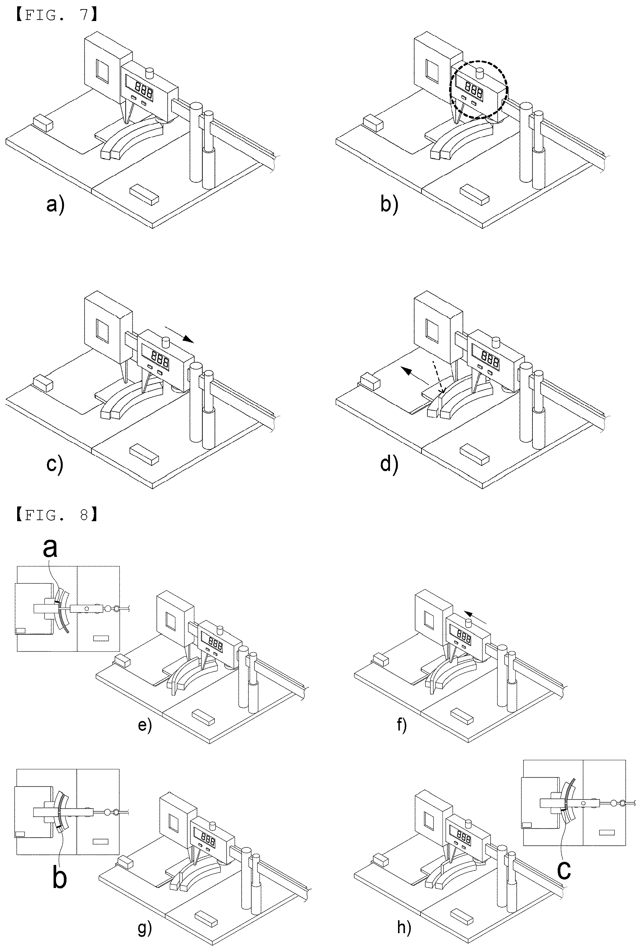

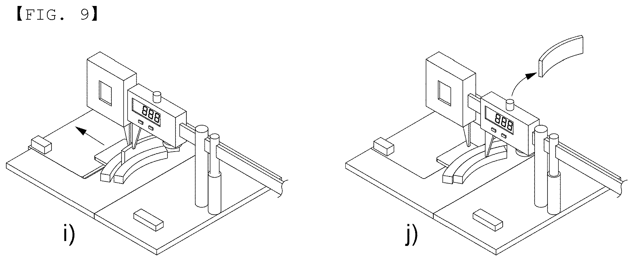

FIG. 5 is a perspective view of a curved battery cell thickness measurement apparatus according to the present invention, FIG. 6 is a schematic view showing a way in which the thickness of a curved battery cell is measured in the state in which the curved battery cell is fixed to the curved battery cell thickness measurement apparatus according to the present invention, and FIGs. 7 to 9 are views sequentially showing a method of measuring the thickness of a curved battery cell using the curved battery cell thickness measurement apparatus according to the present invention.

A description will be given with reference to FIGs. 5 to 9.

The curved battery cell thickness measurement apparatus 1000 according to the present invention includes a flat base 300, a caliper 100, a support 400 configured to fix a main scale 130 of the caliper 100 in order to fix the caliper 100 in a state of being spaced apart from the base 300 by a predetermined distance H, a jig 500 including an arc-shaped first fixing portion 520 and an arc-shaped second fixing portion 540 located under outer jaws 120A of the caliper 100, and a first moving portion 560 configured to move the first fixing portion 520, wherein one of the outer jaws 120A is provided with a first static pressure sensor 110A. The first static pressure sensor 110A is the same as the static pressure device 110 of FIG. 1.

At least one of the first fixing portion 520 and the second fixing portion 540 may be provided with a second static pressure sensor (not shown). The second static pressure sensor may be located in the middle of the first fixing portion 520 and/or the second fixing portion 540. The first static pressure sensor 110A and the second static pressure sensor (not shown) may be the same.

The caliper 100 is a low measurement pressure caliper. The low measurement pressure caliper is the same as the low measurement pressure caliper or the static pressure caliper described in detail with reference to FIG. 1.

The first fixing portion 520 and the second fixing portion 540 may coincide with each other in a centerline AA' of the arc, and the main scale 130 of the caliper 100 may be disposed along the centerline AA' in a state of being spaced apart from the base by a predetermined distance H. In FIG. 5, two supports 400 are shown. It is preferable to provide two supports in order to achieve secure placement along the centerline AA'. In addition, the caliper 100 may not be fixed by the support 400, and the position of the caliper, in particular the position of the outer jaws 120A to which the first static pressure sensor 110A is fixed, may be changed.

The first fixing portion 520 may move along the centerline AA'. Unless the size of the curved battery cell 200 is very large or very small, the position of the second fixing portion 540 rarely changes. The first fixing portion 520 moves along the centerline AA' to form a space between the first fixing portion 520 and the second fixing portion 540, the curved battery cell 200 is disposed in the space, and the first fixing portion 520 moves in the opposite direction to fix the curved battery cell 200. The form in which the curved battery cell 200 is fixed is the same as show in FIG. 6.

Each of the first fixing portion 520 and the second fixing portion 540 is formed in the shape of an arc, and preferably coincides with a curved surface of the curved battery cell 200. If the shape of the curved battery cell 200 and the shape of the arc coincide with each other, the curved battery cell is fixed over a wide surface thereof, and therefore the surface of the curved battery cell 200 does not become abnormal even though the first fixing portion 520 and the second fixing portion 540 are strongly pressed. If the shape of arc is different, i.e., if the radius of the arc is different or if the arc is an elliptical arc rather than circular, the curved battery cell 200 may not be completely brought into tight contact by the first fixing portion 520 and the second fixing portion 540. The first fixing portion 520 and the second fixing portion 540 are configured to vertically fix the curved battery cell 200, and therefore the curved battery cell 200 may be continuously used as long as the shape of the curved battery cell is not deformed by the corners of the first fixing portion 520 and the second fixing portion 540.

In addition, a second moving portion (not shown) configured to move the second fixing portion 540 may be added.

In addition, the present invention provides a curved battery cell thickness measurement method using the curved battery cell thickness measurement apparatus 1000 according to the present invention, the curved battery cell thickness measurement method including the following steps.
1) A step of spacing the first fixing portion 520 and the second fixing portion 540 apart from each other (a of FIG. 6).
2) A step of locating a curved battery cell 200 between the first fixing portion 520 and the second fixing portion 540 (b of FIG. 6).

At this time, there is a separation distance D between the curved battery cell 200 and the outer jaw 120A (or possibly the main scale jaw 132). Consequently, the curved battery cell 200 must be located in tight contact with the second fixing portion 540 rather than the first fixing portion 520. In FIG. 6, the second fixing portion 540 is depicted as being stationary, but it is possible to simultaneously move the first fixing portion 520 and the second fixing portion 540.

In addition, there may be no separation distance D when the curved battery cell 200 is brought into tight contact with the second fixing portion 540. At this time, the first static pressure sensor 110A may be moved further to the left along with the outer jaw 120A or the main scale jaw 132. This movement is relative, and may also be accomplished by moving the first fixing portion 520 or the second fixing portion 540.

3) A step of bringing the first fixing portion 520 and the second fixing portion 540 into tight contact with each other to vertically fix the curved battery cell 200 (c of FIG. 6).

The important thing here is that any one of the first fixing portion 520 and the second fixing portion 540 may be moved, since the first fixing portion and the second fixing portion are moved relative to each other, as mentioned in step 2), and the first fixing portion and the second fixing portion are brought into tight contact with opposite sides of the curved battery cell 200 to vertically fix the curved battery cell. At this time the curved battery cell 200 must not be pressed by the outer jaw 120A and the main scale jaw 132. If the curved battery cell is pressed, the curved battery cell may not be securely vertically fixed, and therefore the position of the curved battery cell must be adjusted.

4) A step of measuring the thickness of the curved battery cell 200 using the caliper 100 (d of FIG. 6).

In step 4), the measurement value of the caliper 100 may be obtained as the thickness value of the curved battery cell when the measurement value of the first static pressure sensor 110A is within a static pressure range. In step 4), the measurement value of the caliper 100 may be obtained as the thickness value of the curved battery cell when both the measurement value of the first static pressure sensor and the measurement value of the second static pressure sensor provided on at least one of the first fixing portion 520 and the second fixing portion 540 are within the static pressure range. However, the measurement value of the second static pressure sensor should be less than or equal to the measurement value of the first static pressure sensor.

The curved battery cell 200 is a battery cell obtained by deforming a long side of a cuboidal battery cell into the shape of an arc, and the thickness of the curved battery cell may be measured in the middle and at the left side and the right side of the arc through steps 1) to 4).

The thickness of the curved battery cell may be measured in the middle and at the left side and the right side of the arc through steps 1) to 4) while the curved battery cell is rotated along the jig.

FIGs. 7 to 9 are views sequentially showing a method of measuring the thickness of a curved battery cell using the curved battery cell thickness measurement apparatus according to the present invention.

FIGs. 7 to 9, which are ten figures from a) to j), show a series of processes. In the curved battery cell thickness measurement apparatus according to the present invention, the caliper is reset (b), and the outer jaw 120B is moved to the right (c). The first fixing portion 520 and the second fixing portion 540 are spaced apart from each other using the first moving portion, a curved battery cell 200 is disposed between the first fixing portion and the second fixing portion, and the curved battery cell 200 is fixed using the first fixing portion 520 and the second fixing portion 540. There are three fixed positions of the curved battery cell 200: f), g), and h), and correspondingly it is preferable to mark the positions of a, b, and c on the jig. f) is for measuring the right end of the curved battery cell 200, g) is for measuring the middle of the curved battery cell 200, and h) is for measuring the left end of the curved battery cell 200. For each measurement, the thickness of the curved battery cell is measured through steps 1) to 4) above. The curved battery cell 200 is rotated between the first fixing portion 520 and the second fixing portion 540 by some angle.

In step (i), the first fixing portion 520 and the second fixing portion 540 are spaced apart from each other, and the curved battery cell 200 is removed from the curved battery cell thickness measurement apparatus (j).

When the thickness of the curved battery cell was measured at three positions (upper, middle, and lower positions), as shown in FIGs. 7 to 9, using the battery cell thickness measurement apparatus according to the present invention, consistent values were obtained. Specifically, when both the first static pressure sensor and the second static pressure sensor were within the static pressure range and the range defined by the present invention, consistent values were obtained. When only the first static pressure sensor was used and was within the static pressure range, consistent values were also obtained. Consistent values were not obtained when the first static pressure sensor was not within the static pressure range, and consistent values were not obtained even when only the second static pressure sensor was used.

Those skilled in the art to which the present invention pertains will appreciate that various applications and modifications are possible within the scope of the invention as defined by the claims.

### (Description of Reference Symbols)

1000: Curved battery cell thickness measurement apparatus
100: Low measurement pressure caliper
110: Static pressure device
110A: First static pressure sensor
115: Static pressure indicator
116: Needle
117: Static pressure region
118: Lower pressure region
119: Upper pressure region
120A, 120B: Outer jaws
130: Main scale
132: Main scale jaw
140: Stopper
150: Depth measurement tip
160: Fixing screw
170: Digital display unit
175: Reset button
180: Thumb roller
200: Curved battery cell
300: Base
400: Support
500: Jig
520: First fixing portion
540: Second fixing portion
560: First moving portion
AA': Centerline
Dc, D1c: Thicknesses of curved battery cell
D_{J}: Main scale jaw movement range
D: Separation distance
H: Separation height

## Claims

1. A curved battery cell thickness measurement apparatus comprising:
a flat base;
a caliper;
a support to secure a main scale of the caliper and to space the caliper apart from the base by a predetermined distance;
a jig comprising an arc-shaped first fixing portion and an arc-shaped second fixing portion, wherein the arc-shaped first fixing portion and the arc-shaped second fixing portion are located below outer jaws of the caliper; and
a first moving portion to move the arc-shaped first fixing portion, wherein
one of the outer jaws includes a first static pressure sensor.

2. The curved battery cell thickness measurement apparatus according to claim 1, wherein at least one of the arc-shaped first fixing portion and the arc-shaped second fixing portion includes a second static pressure sensor.

3. The curved battery cell thickness measurement apparatus according to claim 2, wherein the second static pressure sensor is located in a middle of the arc-shaped first fixing portion and/or the arc-shaped second fixing portion.

4. The curved battery cell thickness measurement apparatus according to claim 1, wherein the caliper is a low measurement pressure caliper.

5. The curved battery cell thickness measurement apparatus according to claim 1, wherein
a centerline of the arc-shaped first fixing portion and a centerline of the arc-shaped second fixing portion are aligned, and
the main scale of the caliper is disposed along the centerline and is spaced apart from the base by a predetermined distance.

6. The curved battery cell thickness measurement apparatus according to claim 5, wherein the arc-shaped first fixing portion is configured to move along the centerline.

7. The curved battery cell thickness measurement apparatus according to claim 1, further comprising a second moving portion configured to move the arc-shaped second fixing portion.

8. A curved battery cell thickness measurement method using the curved battery cell thickness measurement apparatus according to any one of claims 1 to 7, the curved battery cell thickness measurement method comprising:
1) spacing the arc-shaped first fixing portion apart from the arc-shaped second fixing portion;
2) placing a curved battery cell between the arc-shaped first fixing portion and the arc-shaped second fixing portion;
3) bringing the arc-shaped first fixing portion and the arc-shaped second fixing portion into tight contact with each other to vertically secure the curved battery cell; and
4) measuring a thickness of the curved battery cell using the caliper.

9. The curved battery cell thickness measurement method according to claim 8, wherein, in step 4), a measurement value of the caliper is obtained as a thickness value of the curved battery cell when a measurement value of the first static pressure sensor is within a static pressure range.

10. The curved battery cell thickness measurement method according to claim 8, wherein, in step 4), a measurement value of the caliper is obtained as a thickness value of the curved battery cell when both a measurement value of the first static pressure sensor and a measurement value of a second static pressure sensor provided on at least one of the arc-shaped first fixing portion and the arc-shaped second fixing portion are within a static pressure range.

11. The curved battery cell thickness measurement method according to claim 8, wherein
the curved battery cell is a cuboidal battery cell deformed into an arc-shape along a long side of the cuboidal battery cell, and
the thickness of the curved battery cell is measured in a middle of the arc-shape of the curved battery cell, at a left side of the arc-shape of the curved battery cell, and a right side of the arc-shape of the curved battery cell through steps 1) to 4).

12. The curved battery cell thickness measurement method according to claim 11, wherein the thickness of the curved battery cell is measured in the middle of the arc-shape of the curved battery cell, at the left side of the arc-shape of the curved battery cell, and the right side of the arc-shape of the curved battery cell through steps 1) to 4) by rotating the curved battery cell along the jig.

## Patentansprüche

1. Vorrichtung zur Messung der Dicke einer gekrümmten Batteriezelle, aufweisend:
eine ebene Basis;
einen Messschieber;
eine Halterung zum Befestigen einer Hauptskala des Messchiebers und zum Beabstanden des Messchiebers von der Basis um einen vorbestimmten Abstand;
eine Spannvorrichtung, die einen bogenförmigen ersten Befestigungsabschnitt und einen bogenförmigen zweiten Befestigungsabschnitt aufweist, wobei der bogenförmige erste Befestigungsabschnitt und der bogenförmige zweite Befestigungsabschnitt unter äußeren Schenkeln des Messschiebers angeordnet sind; und
einen ersten Bewegungsabschnitt zum Bewegen des bogenförmigen ersten Befestigungsabschnitts,
wobei einer der äußeren Schenkel einen ersten statischen Drucksensor aufweist.

2. Vorrichtung zur Messung der Dicke einer gekrümmten Batteriezelle nach Anspruch 1, wobei der bogenförmige erste Befestigungsabschnitt und/oder der bogenförmige zweite Befestigungsabschnitt einen zweiten statischen Drucksensor aufweist.

3. Vorrichtung zur Messung der Dicke einer gekrümmten Batteriezelle nach Anspruch 2, wobei der zweite statische Drucksensor in einer Mitte des bogenförmigen ersten Befestigungsabschnitts und/oder des bogenförmigen zweiten Befestigungsabschnitts angeordnet ist.

4. Vorrichtung zur Messung der Dicke einer gekrümmten Batteriezelle nach Anspruch 1, wobei der Messschieber ein Niedrigdruck-Messschieber ist.

5. Vorrichtung zur Messung der Dicke einer gekrümmten Batteriezelle nach Anspruch 1, wobei eine Mittellinie des bogenförmigen ersten Befestigungsabschnitts und eine Mittellinie des bogenförmigen zweiten Befestigungsabschnitts aufeinander ausgerichtet sind und die Hauptskala des Messschiebers entlang der Mittellinie angeordnet ist und von der Basis um einen vorbestimmten Abstand beabstandet ist.

6. Vorrichtung zur Messung der Dicke einer gekrümmten Batteriezelle nach Anspruch 5, wobei der bogenförmige erste Befestigungsabschnitt konfiguriert ist, um sich entlang der Mittellinie zu bewegen.

7. Vorrichtung zur Messung der Dicke einer gekrümmten Batteriezelle nach Anspruch 1, ferner aufweisend einen zweiten Bewegungsabschnitt, der konfiguriert ist, um den bogenförmigen zweiten Befestigungsabschnitt zu bewegen.

8. Dicke einer gekrümmten Batteriezelle unter Verwendung der Dicke einer gekrümmten Batteriezelle
Vorrichtung zur Messung der Dicke einer gekrümmten Batteriezelle nach einem der Ansprüche 1 bis 7, wobei das Verfahren zur Messung der Dicke einer gekrümmten Batteriezelle aufweist:
1) Beabstanden des bogenförmigen ersten Befestigungsabschnitts von dem bogenförmigen zweiten Befestigungsabschnitt;
2) Platzieren einer gekrümmten Batteriezelle zwischen dem bogenförmigen ersten Befestigungsabschnitt und dem bogenförmigen zweiten Befestigungsabschnitt;
3) Bringen des bogenförmigen ersten Befestigungsabschnitts und des bogenförmigen zweiten Befestigungsabschnitts in engen Kontakt miteinander, um die gekrümmte Batteriezelle vertikal zu befestigen; und
4) Messen einer Dicke der gekrümmten Batteriezelle unter Verwendung des Messschiebers.

9. Verfahren zur Messung der Dicke einer gekrümmten Batteriezelle nach Anspruch 8, wobei in Schritt 4) ein Messwert des Messschiebers als ein Dickenwert der gekrümmten Batteriezelle erhalten wird, wenn ein Messwert des ersten statischen Drucksensors innerhalb eines statischen Druckbereichs liegt.

10. Verfahren zur Messung der Dicke einer gekrümmten Batteriezelle nach Anspruch 8, wobei in Schritt 4) ein Messwert des Messschiebers als ein Dickenwert der gekrümmten Batteriezelle erhalten wird, wenn sowohl ein Messwert des ersten statischen Drucksensors als auch ein Messwert eines zweiten statischen Drucksensors, der an dem bogenförmigen ersten Befestigungsabschnitt und/oder dem bogenförmigen zweiten Befestigungsabschnitt vorgesehen ist, innerhalb eines statischen Druckbereichs liegen.

11. Verfahren zur Messung der Dicke einer gekrümmten Batteriezelle nach Anspruch 8, wobei die gekrümmte Batteriezelle eine quaderförmige Batteriezelle ist, die entlang einer langen Seite der quaderförmigen Batteriezelle in eine Bogenform verformt ist, und die Dicke der gekrümmten Batteriezelle in einer Mitte der Bogenform der gekrümmten Batteriezelle, an einer linken Seite der Bogenform der gekrümmten Batteriezelle und einer rechten Seite der Bogenform der gekrümmten Batteriezelle durch die Schritte 1) bis 4) gemessen wird.

12. Verfahren zur Messung der Dicke einer gekrümmten Batteriezelle nach Anspruch 11, wobei die Dicke der gekrümmten Batteriezelle in der Mitte der Bogenform der gekrümmten Batteriezelle, an der linken Seite der Bogenform der gekrümmten Batteriezelle und der rechten Seite der Bogenform der gekrümmten Batteriezelle durch die Schritte 1) bis 4) durch Drehen der gekrümmten Batteriezelle entlang der Spannvorrichtung gemessen wird.

## Revendications

1. Appareil de mesure de l'épaisseur d'un élément de batterie de forme incurvée comprenant :
un socle plat ;
un pied à coulisse ;
un support pour fixer une échelle principale du pied à coulisse, et espacer d'une distance prédéterminée le pied à coulisse du socle ;
un bâti comprenant une première partie de fixation arquée et une deuxième partie de fixation arquée, la première partie de fixation arquée et la deuxième partie de fixation arquée étant positionnées sous des mâchoires extérieures du pied à coulisse ; et
une première partie mobile pour déplacer la première partie de fixation arquée,
une des mâchoires extérieures comprenant un deuxième capteur de pression statique.

2. Appareil de mesure de l'épaisseur d'un élément de batterie de forme incurvée selon la revendication 1, au moins une de la première partie de fixation arquée et de la deuxième partie de fixation arquée comprenant un deuxième capteur de pression statique.

3. Appareil de mesure de l'épaisseur d'un élément de batterie de forme incurvée selon la revendication 2, le deuxième capteur de pression statique étant situé au milieu de la première partie de fixation arquée et/ou de la deuxième partie de fixation.

4. Appareil de mesure de l'épaisseur d'un élément de batterie de forme incurvée selon la revendication 1, le pied à coulisse étant un pied à coulisse à faible pression de mesure.

5. Appareil de mesure de l'épaisseur d'un élément de batterie de forme incurvée selon la revendication 1,
un axe médian de la première partie de fixation arquée et un axe médian de la deuxième partie de fixation arquée étant alignés, et
l'échelle principale du pied à coulisse étant disposée le long de l'axe médian, et étant espacée du socle par une distance prédéterminée.

6. Appareil de mesure de l'épaisseur d'un élément de batterie de forme incurvée selon la revendication 5, la première partie de fixation arquée étant configurée pour se déplacer le long de l'axe médian.

7. Appareil de mesure de l'épaisseur d'un élément de batterie de forme incurvée selon la revendication 1, comprenant en outre une deuxième partie mobile configurée pour déplacer la deuxième partie de fixation arquée.

8. Procédé de mesure de l'épaisseur d'un élément de batterie de forme incurvée utilisant l'appareil de mesure de l'épaisseur d'un élément de batterie de forme incurvée selon une quelconque des revendications 1 à 7, le procédé de mesure de l'épaisseur d'un élément de batterie de forme incurvée comprenant :
1) écarter la première partie de fixation arquée de la deuxième partie de fixation arquée ;
2) positionner un élément de batterie de forme incurvée entre la première partie de fixation arquée et la deuxième partie de fixation arquée ;
3) amener la première partie de fixation arquée et la deuxième partie de fixation arquée en étroit contact entre elles pour fixer verticalement l'élément de batterie de forme incurvée ;
4) mesurer une épaisseur de l'élément de batterie de forme incurvée à l'aide du pied à coulisse.

9. Procédé de mesure de l'épaisseur d'un élément de batterie de forme incurvée selon la revendication 8, dans lequel, à l'étape 4), une valeur de mesure du pied à coulisse est obtenue en tant que valeur de l'épaisseur de l'élément de batterie de forme incurvée lorsqu'une valeur de mesure du premier capteur de pression statique est compris dans une plage de pression statique.

10. Procédé de mesure de l'épaisseur d'un élément de batterie de forme incurvée selon la revendication 8, dans lequel, à l'étape 4), une valeur de mesure du pied à coulisse est obtenue en tant que valeur de l'épaisseur de l'élément de batterie de forme incurvée lorsqu'une valeur de mesure du premier capteur de pression statique et une valeur de mesure du deuxième capteur de pression statique, fournies sur au moins une de la première partie de fixation arquée et de la deuxième partie de fixation arquée, est comprise dans une plage de pression statique.

11. Procédé de mesure de l'épaisseur d'un élément de batterie de forme incurvée selon la revendication 8,
l'élément de batterie de forme incurvée étant un élément de batterie cuboïde déformé en une forme arquée sur un côté long de l'élément de batterie cuboïde, et
l'épaisseur de l'élément de batterie de forme incurvée étant mesurée au milieu de la forme arquée de l'élément de batterie de forme incurvée, sur un côté gauche de la forme arquée de l'élément de batterie de forme incurvée, et un côté droit de la forme arqué de l'élément de batterie de forme incurvée à travers les étapes 1) à 4).

12. Procédé de mesure de l'épaisseur d'un élément de batterie de forme incurvée selon la revendication 11, l'épaisseur de l'élément de batterie de forme incurvée étant mesurée au milieu de la forme arquée de l'élément de batterie de forme incurvée, sur le côté gauche de la forme arquée de l'élément de batterie de forme incurvée et le côté droit de la forme arquée de l'élément de batterie de forme incurvée des étapes 1) à 4) en tournant l'élément de batterie de forme incurvée le long du bâti.
